Europäisches Patentamt

European Patent Office

Office européen des brevets

(19)

(11) Veröffentlichungsnummer : **0 029 799**
**B1**

(12) **EUROPÄISCHE PATENTSCHRIFT**

(45) Veröffentlichungstag der Patentschrift :
01.06.83

(21) Anmeldenummer : 80630051.3

(22) Anmeldetag : 17.11.80

(51) Int. Cl.³ : **F 24 J   3/00**

(54) **Verfahren und Vorrichtung zur Speicherung von Wärmeenergie.**

(30) Priorität : 16.11.79 LU 81906
22.02.80 LU 82194
09.06.80 LU 82508
30.06.80 DE 3024797

(43) Veröffentlichungstag der Anmeldung :
03.06.81 Patentblatt 81/22

(45) Bekanntmachung des Hinweises auf die Patenterteilung : 01.06.83 Patentblatt 83/22

(84) Benannte Vertragsstaaten :
AT BE CH DE FR GB IT LI LU NL SE

(56) Entgegenhaltungen :
DE A 2 808 464
DE A 2 810 360
FR A 2 376 371
US A 3 955 554

(73) Patentinhaber : **Gath, Nicolas**
**15, rue Joseph Tockert**
**L-Luxembourg Hollerich (LU)**

(72) Erfinder : **Gath, Nicolas**
**15, rue Joseph Tockert**
**L-Luxembourg Hollerich (LU)**

(74) Vertreter : **Beyer, Werner, Dipl.Ing. et al**
**Patentanwälte Dipl.-Ing. W. Beyer Dipl.-Wirtsch.-Ing.**
**B. Jochem Staufenstrasse 36 Postfach 174109**
**D-6000 Frankfurt / Main (DE)**

EP 0 029 799 B1

Verfahren und Vorrichtung zur Speicherung von Wärmeenergie

Die Erfindung betrifft ein Verfahren zur Speicherung von Wärmeenergie, wobei ein Hydroxid, z. B. Calcium-, Magnesium- oder Bariumhydroxid, durch Wärmezufuhr in ein Oxid und Wasserdampf zersetzt, diese Stoffe getrennt und später wieder zusammengebracht werden. Die Erfindung betrifft weiterhin eine zur Durchführung des genannten Verfahrens geeignete Vorrichtung.

Derartige Verfahren und Vorrichtungen sind in den US-A-3 973 552 und US-A-4 054 126 beschrieben, wobei durch Hindurchleiten von hocherhitztem Wärmeträgergas ein Hydroxid von Calcium, Magnesium oder Barium in Oxid und Wasserdampf zersetzt wird. Wenn später, vorzugsweise in der kalten Winterjahreszeit, Wärme benötigt wird, wird das gleiche Wärmeträgergas mit niedriger Temperatur zusammen mit Wasserdampf durch die Oxidmasse geleitet. Hierbei bildet sich aus dem Oxid wieder Hydroxid, das Wärmeträgergas erhitzt sich und kann einem Wärmeaustauscher zugeführt werden, wo es seine Wärme an das Wasser einer Warmwasserzentralheizung abgibt.

Das Verfahren hat den Nachteil, dass auch die Behälter, in denen das Hydroxid respektiv das später daraus gebildete Oxid gelagert werden, auf die erforderliche Zersetzungstemperatur von mindestens 300 °C erhitzt werden müssen. Die aus einem kg Calciumoxid zu gewinnende Wärmemenge ist rund 20 mal geringer als diejenige, die man durch Verbrennung von 1 kg Erdöl erhalten kann. Die Dichte des Calciumoxidpulvers kann sehr stark variieren und etwa zwischen 0,4 bis 0,8 kg/dm³ liegen. Da der Behälter nur zu etwa 40 bis 50 % seines Inhalts gefüllt werden soll, benötigt man wohl mindestens einen Behälter von 50 Kubikmeter um die gleiche Wärmemenge zu speichern, wie sie aus 1 Kubikmeter Erdöl zu gewinnen ist. Wenn der ganze Behälter auf 300 Grad Celsius erhitzt werden muss, so werden normalerweise die Wärmeverluste durch die Grösse der Behälteroberfläche zu gross. Es erscheint daher problematisch, wie man diese Wärmeverluste ohne allzu kostspielige Massnahmen verringern soll.

Der Erfindung liegt die Aufgabe zugrunde, ein Verfahren und eine zu dessen Durchführung geeignete Vorrichtung zur Wärmespeicherung zu schaffen, bei denen der Materialeinsatz und die Wärmeverluste gering sind.

Vorstehende Aufgabe wird erfindungsgemäss dadurch gelöst, dass mittels des Oxids einem wasserhaltigen hygroskopischen Stoff, z. B. einem Hydrat oder einer Lösung von Natrium- oder Kaliumhydroxid oder Calciumchlorid, Wasser entzogen und nach Rückumwandlung des dabei gebildeten Hydroxids durch weitere Wärmezufuhr in das Oxid dieser Vorgang so oft wiederholt wird, bis der hygroskopische Stoff als hochkonzentrierte Lösung, festes Hydrat oder im hydratwasserfreien Zustand vorliegt, und dass zur Wärmerückgewinnung der entwässerte hygroskopische Stoff mit Wasser und/oder Wasserdampf zur exothermen Reaktion gebracht wird.

Der wesentliche Vorteil der Erfindung besteht darin, dass bei der Speicherung der Wärme nur ein kleiner statt eines grossen Behälters erhitzt wird. Das Mittel dazu ist die Uebertragung des hygroskopischen Zustands von einer Substanz auf eine andere, z. B. von Calciumoxid auf eine andere hygroskopische Masse, z. B. wasserarme Natriumhydroxidlösung oder festes Natriumhydroxid.

Die zur Durchführung des neuen Verfahrens erfindungsgemäss vorgeschlagene Vorrichtung besteht aus einem ersten Behälter, in welchem das Hydroxid durch Sonnenstrahlenwärme zersetzt werden kann, einem zweiten Behälter, in welchem Wasser verdampfen kann, so dass dabei die Verdampfungswärme der Umgebung entzogen wird und ist gekennzeichnet durch einen hygroskopische Lösung oder das Hydrat eines hygroskopischen Stoffs enthaltenden, dritten Behälter, dessen Hohlraum über der Lösung abwechselnd mit dem ersten und zweiten Behälter zu verbinden ist, sowie durch einen Wärmeaustauscher zwischen dem dritten Behälter und einer wärmeverbrauchenden Heizeinrichtung.

In bevorzugter Weise wird der feste hygroskopische Stoff oder die hochkonzentrierte hygroskopische Lösung in Teilmengen aus einem grösseren Vorrat entnommen und mit Wasser oder Wasserdampf zur exothermen Reaktion gebracht. Bei der hierfür vorgesehenen Vorrichtung ist der dritte Behälter in einen grösseren Vorratsbehälter, welcher mit dem ersten Behälter zu verbinden ist, und in einen kleineren Wärmeerzeugungsbehälter, welcher mit dem zweiten Behälter zu verbinden ist und mit dem Wärmeaustauscher für die Wärmeabgabe zusammenwirkt, aufgeteilt, wobei die beiden Teilbehälter durch absperrbare Leitungen in beiden Richtungen miteinander zu verbinden sind. Der besondere Vorteil dieser Massnahme ergibt sich daraus, dass bei der Wärmeabgabe nur ein kleiner statt eines grossen Behälters erhitzt wird und somit die Isolierung vereinfacht und der Wärmeverlust minimiert werden kann.

In weiterer bevorzugter Ausführung der Erfindung ist vorgesehen, dass die Teilmengen des festen hygroskopischen Stoffs durch Hindurchleiten einer ungesättigten Lösung durch den Vorrat entnommen und die dabei gebildete Lösung höherer Konzentration an anderer Stelle mit Wasser und/oder Wasserdampf zur exothermen Reaktion gebracht wird. Würde man stattdessen zum Auflösen des festen hygroskopischen Materials Wasser, statt wie vorgesehen, hygroskopische Lösung verwenden, würde ein sehr grosser Teil der gespeicherten Wärme bereits in dem Vorratsbehälter frei werden. Ohne aussergewöhnliche architektonische Massnahmen müsste diese Wärme als verloren angesehen werden. Bei normaler Bauweise ist nur die in dem kleinen Wärmeerzeugungsbehälter entstehende Wärme nutzbar. Da zur Ueberführung der festen hygroskopischen Masse mittelmässig konzentrierte Lösung verwendet wird, ist der Wirkungsgrad wesentlich besser als beim Auflösen der festen Masse mit Wasser.

Die Erfindung wird nachstehend anhand von in der Zeichnung dargestellten Ausführungsbeispielen näher erläutert. Es zeigen :

Figur 1 eine schematische Darstellung des prinzipiellen Aufbaus einer Vorrichtung zur Speicherung von Wärmeenergie gemäss der Erfindung ;

Figur 2 einen Schaltplan einer im Vergleich zu Fig. 1 verbesserten Anlage ;

Figur 3 a, b, c einen senkrechten und einen waagerechten Schnitt sowie eine Draufsicht des Behälters 10 in Fig. 2 ;

Figur 4 einen Querschnitt des Behälters 30 in Fig. 2 ;

Figur 5 eine Modifikation des Behälters 30 ;

Figur 6 einen gegenüber Fig. 2 geänderten Schaltplan.

Figuren 7 und 8 Schaltpläne von im Vergleich zu Fig. 2 und 6 vereinfachten Anlagen.

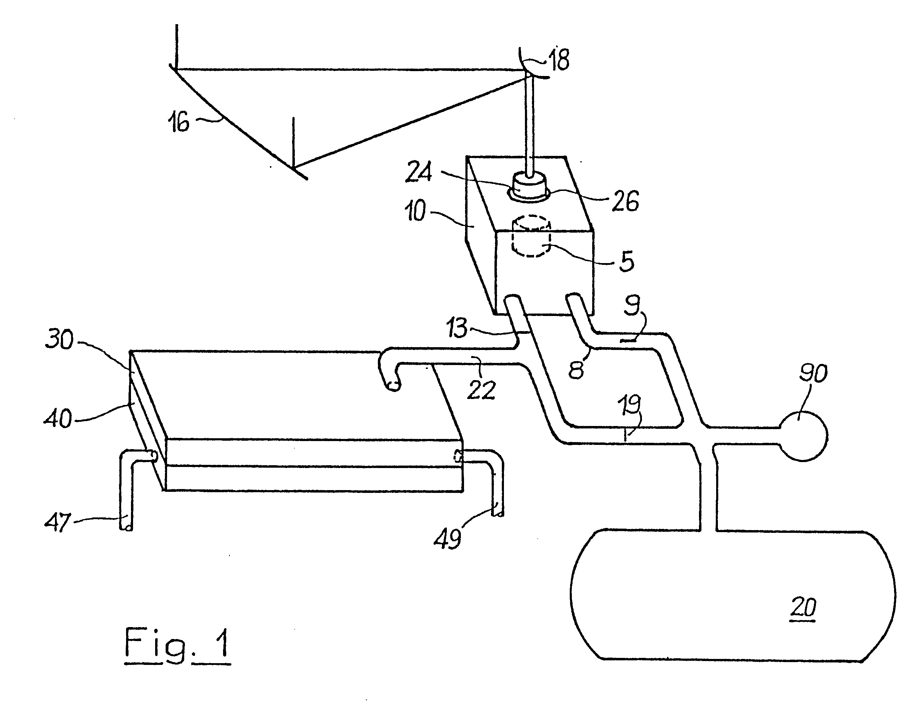

Die Vorrichtung nach Fig. 1 besteht u. a. aus einem Behälter 10, der ein Hydroxid, z. B. Calcium-, Magnesium- oder Bariumhydroxid enthält. In seiner Mitte hat er einen aus feuerfestem Material bestehenden Becher 5, welcher leer ist. Das Hydroxid ist um den Becher herum angeordnet und liegt an dessen Aussenflächen an. Auf der Oberseite weist der Behälter 10 ein rundes Loch auf, das von einer Glasplatte 24 und einer darunter liegenden Dichtung 26 aus Silikongummi abgedichtet ist. Wenn die Sonne scheint, geht von einem Hohlspiegel 16 ein konvergentes Strahlenbündel zu einem Konvexspiegel 18, der so gewölbt ist, dass die reflektierten Strahlen nahezu parallel verlaufen. Sie treffen auf die Glasplatte 24 und treten durch das Loch in der Oberseite des Behälters 10 in das Innere des Bechers 5 ein. Der Becher und das anliegende Hydroxid, im Beispielsfall Calciumhydroxid, erhitzen sich. Bei einer Temperatur, die noch unter 400 °C liegt, bildet sich Calciumoxid, und das freiwerdende Wasser geht in gasförmigen Zustand über. Man kann die Grösse des Behälters 10 leicht so wählen, dass die darin enthaltene Menge Calciumhydroxid etwas grösser ist als die Menge, die an einem sehr sonnenreichen Tag von der Strahlung zersetzt wird. Das im Behälter 10 gebildete Wasser gelangt in gasförmigem Zustand durch ein Rohr 8 über ein geöffnet angedeutetes Ventil 9 in einen zweiten Behälter 20 und kondensiert dort. Wenn gegen Abend die Sonnenstrahlung so schwach wird, dass keine Zersetzung mehr stattfindet, wird das Ventil 9 gesperrt und ein weiteres Ventil 13 in einer Rohrleitung 22 zu einem dritten Behälter 30 geöffnet. Der Behälter 10 ist jetzt über die Rohrleitung 22 mit dem Behälter 30 verbunden. Beide Behälter sind luftleer. Der Behälter 30 hat eine grosse Bodenfläche und eine geringe Höhe. Er ist bis zu halber Höhe mit Wasser gefüllt, in dem Natriumhydroxid gelöst ist. Diese Lösung hat bei den vorkommenden Temperaturen einen merklichen Wasserdampfdruck, und es fliesst daher Dampf in den Behälter 10, wo er vom Calciumoxid sofort gebunden wird und Hydroxid entsteht, so dass ständig wieder Wasserdampf in den Behälter 10 nachströmt. Die Konzentration der Natriumhydroxidlösung nimmt also zu. Im Behälter 10 entsteht Wärme, während in dem Behälter 30 die Lösung sich abkühlt. Wie schnell diese Vorgänge ablaufen, hängt davon ab, wie schnell die im Behälter 10 gebildete Wärme abgeführt wird und wie schnell der Wärmeentzug im Behälter 30 ausgeglichen wird. Es ist vorteilhaft, die Dimensionierung der Behälter 30 und 10 so zu wählen, dass nach Ablauf der Nacht im Behälter 10 das Calciumoxid vollständig in Calciumhydroxid verwandelt ist. Sobald nun starke Sonneneinstrahlung einsetzt und das Hydroxid in Wasserdampf und Calciumoxid umgesetzt wird, öffnet man das Ventil 9 und schliesst das Ventil 13. Es wiederholen sich nun die gleichen Vorgänge wie vorher. Das gebildete Wasser gelangt in den Behälter 20, und gegen Abend ist das Calciumhydroxid in Calciumoxid umgewandelt. In der Nacht bildet sich, nach Schliessen des Ventils 9 und Oeffnen des Ventils 13, wieder Hydroxid, und die Lösung im Behälter 30 wird weiter konzentriert. Da sich dies jede Nacht wiederholt, ist bei Beginn der kalten Jahreszeit die Lösung im Behälter 30 an einem sehr hohen Konzentrationsgrad angelangt. Wesentlich besser ist es, wenn der Konzentriervorgang so weit getrieben wird, dass feste Hydrate von Natriumhydroxid auskristallisieren, oder dass nur noch eine feste Masse von Hydraten und/oder fast hydratwasserfreiem Natriumhydroxid entsteht. Diese Masse oder die konzentrierte Lösung wird nachstehend kurz hygroskopischer Speicherstoff genannt.

Wenn es nun kälter wird und die Inbetriebnahme der Heizung erforderlich wird, sperrt man die Ventile 9 und 13 und öffnet ein Ventil 19 in einer Verbindungsleitung zwischen den Behältern 20 und 30. Die hochkonzentrierte Lösung im Behälter 30 hat einen niedrigen Dampfdruck im Vergleich zu dem reinen Wasser im Behälter 20. Daher verdampft dieses und kondensiert im Behälter 30. Der hygroskopische Speicherstoff im Behälter 30 erwärmt sich und gibt seine Wärme an das Wasser in einem darunter angeordneten Behälter 40 ab, der als Wärmeaustauscher wirkt, da der Boden des Behälters 30 gleichzeitig die Oberseite des Behälters 40 bildet. Wasser einer Warmwasserheizung, das sich bei seinem Kreislauf in den Heizkörpern abgekühlt hat, wird durch ein Rohr 47 in den Behälter 40 geleitet, erwärmt sich dort und fliesst durch ein Rohr 49 wieder zu den Heizkörpern, wo es seine Wärme zum Heizen der Räume abgibt.

Für den Fall, dass das Leitungssystem oder die Behälter an irgendeiner Stelle nicht ganz luftdicht sind, ist eine Vakuumpumpe 90 zum Herauspumpen von eingedrungener Luft vorgesehen. Man kann einen zweiten mit Calciumoxid bzw. Calciumhydroxid gefüllten Behälter vorsehen und diesen abwechselnd mit dem ersten der Sonneneinstrahlung unterwerfen. Wenn in dem einen die Calciumhydroxidzersetzung stattfindet und das dabei gebildete Wasser im Behälter 20 kondensiert, kann der andere noch weiter mit dem Behälter 30 in Verbindung stehen, so dass das Austreiben des Wassers aus dem hygroskopischen Speicherstoff auch am Tage weiter stattfinden kann. Dies wirkt sich als grosser Vorteil aus, wenn der hygroskopische Speicherstoff bereits stark entwässert ist und die weitere Entwässerung nur noch träge voranschreitet.

Die Einrichtung bezieht also im Winter ihre Wärme teilweise von aussen, arbeitet also ähnlich wie eine Wärmepumpe, da die Wärme, welche für die Verdampfung des Wassers im Behälter 20 benötigt wird, der Umgebung entzogen wird. Die Zufuhr dieser Wärme kann vom Erdboden aus durch die Wand des Behälters 20 erfolgen, oder es können andere Mittel hierzu verwendet werden. Beispielsweise kann man im Inneren des Behälters ein System von Rohren anbringen, durch das man die Aussenluft leitet, solange diese noch wärmer ist als das Wasser des Behälters.

Statt der in Fig. 1 gezeigten Spiegel könnten natürlich auch Linsen verwendet werden.

Die Umwandlung der Lichtstrahlen in Wärme erfolgt bei der beschriebenen Anlage in einem Raum, der keine Luft enthält, sondern je nach Betriebszustand mehr oder weniger Wasserdampf, und an einer Stelle, die möglichst zentral in der zu zersetzenden Calciumhydroxidmasse liegt. Würde die Umwandlung der Sonnenstrahlen in Wärme an der Aussenfläche des Behälters 10 erfolgen, so würde diese eine höhere Temperatur aufweisen, als die innenliegende Calciumhydroxidmasse. Die Aussenfläche würde einen grossen Teil der erzeugten Wärme nach aussen verlieren. Bei der erfindungsgemässen Ausführung des Behälters 10 liegt dagegen ein umgekehrtes Temperaturgefälle vor, und die Wärmeabstrahlungsverluste werden entsprechend geringer, besonders wenn der Becher 5 flaschenförmig ausgebildet wird. Man kann die Eintrittsstelle der Lichtstrahlen in den Behälter 10 nicht als Oeffnung ausführen, weil dann die Luft hier eintreten und die Verdampfungsvorgänge stören würde. Diese Durchtrittsstelle muss daher für Licht, nicht aber für Luft passierbar sein und ist daher in Form einer Glasplatte 24 ausgeführt.

Ferner dürfte es vorteilhaft sein, wenn die Masse, welche in den Behälter 10 eingefüllt wird, sei es nun als Calciumoxid oder als Calciumhydroxid, eine geringe Menge NaOH, etwa 1%, enthält. Es ist anzunehmen, dass dies die Reaktionsfähigkeit des Calciumoxids erhöht, besonders da auch in der präparativen Chemie zum Trocknen von Gasen nicht reines Calciumoxid, sondern sog. Natronkalk benutzt wird.

In dem Ausführungsbeispiel nach Fig. 1 kann man das Natriumhydroxid auch durch einen anderen hygroskopischen Stoff, beispielsweise durch Kaliumhydroxid oder Calciumchlorid ersetzen.

Die Verwendung von Calciumhydroxid zum Austreiben des Wassers aus dem hygroskopischen Speicherstoff erlaubt eine sehr weitgehende Entwässerung und hat folgende Vorteile: Man kann die ganze Masse des hygroskopischen Speicherstoffs gleichzeitig dem Entwässerungsprozess unterwerfen und dies bei normaler Umgebungstemperatur. Die dabei entstehenden Kristalle (beispielsweise von $NaOH \cdot 6H_2O$ oder $NaOH \cdot 4H_2O$) haben eine grosse Oberfläche, an welcher die weitere Entwässerung stattfinden kann. Hinzukommt, dass das Kristallgefüge durch weiteren Wasserverlust noch mehr aufgelockert wird. Wenn man aber Natriumhydroxidlösung, ohne Verwendung von Calciumoxid, durch direktes Erhitzen mittels Sonnenstrahlungswärme im Vakuum konzentrieren wollte, müsste man den entstehenden Wasserdampf bei etwa 20 °C kondensieren, und das entstehende Wasser hat dann einen Dampfdruck von 2 337 Pascal (17,5 Torr). Da der Dampfdruck der zu konzentrierenden Lösung höher sein muss, braucht man schon eine Temperatur die höher liegt als 60 °C, wenn die Lösung 50 Teile NaOH auf 100 Teile Lösung enthält. Da man für die erforderlichen grossen Mengen von NaOH entsprechend grosse Behälter braucht, würden an deren Wänden grosse Wärmeverluste auftreten. Auch wäre die Oberfläche, an welcher eine Entwässerung stattfinden kann, immer nur die einer glatten Flüssigkeitsoberfläche, d. h. die der Lösung oder der geschmolzenen Hydrate. Wohl könnte man die Lösung zum Konzentrieren in einen kleineren Behälter pumpen, um die Wärmeverluste gering zu halten. Bei Konzentrationen über 54 Anteile NaOH auf 100 Teile Lösung wird auch das schwierig, weil die Hydrate sich auskristallisieren.

Es ist möglich, dass im Behälter 30 die konzentrierte Natriumhydroxidlösung oder Calciumchloridlösung in Berührung mit dem Stahlblech im Laufe der Zeit eine geringe Menge Wasserstoff entwickelt. In diesem Fall würde man denselben mit Hilfe der in Fig. 1 mit 90 bezeichneten Vakuumpumpe auspumpen, da auch Wasserstoff die Verdampfungsvorgänge stören würde. Man kann aber auch den Behälter 30 mit Polyäthylenfolie, Polypropylenfolie oder einem anderen alkalifesten Kunststoff auskleiden und damit sowohl die Wasserstoffbildung als auch die langsame Korrosion verhindern. Weiter kann man auch die Natriumhydroxidlösung oder die Calciumchloridlösung in kleineren Behältern aus Polystyrol unterbringen, die oben offen sind und innerhalb des grösseren Behälters 30 aus Stahlblech angeordnet sind. Der Behälter 30 kann auch aus Kupferblech bestehen und die Natriumhydroxidlösung kann dann direkt mit dem Kupferblech in Berührung stehen, ohne dass Korrosion entsteht, weil der Raum luftleer und somit sauerstofffrei ist. Die Wärme, die im Sommer beim Austreiben des Wassers aus dem hygroskopischen Speicherstoff benötigt wird, kann man dem Behälter 30 zuführen, indem man an der Aussenseite der Behälterwand festanliegende Rohre anbringt, in welchen Wasser zirkuliert, das von einem Wärmeaustauscher aus der Umgebungsluft Wärme aufnimmt und diese an die Behälterwand abgibt. Bei Beginn der Heizperiode würde das Wasser aus diesem Rohrsystem ablaufen gelassen, so dass jetzt der Behälter eine gute Wärmeisolierung genenüber der umgebenden Erde besitzt.

Statt eines einzigen Behälters 30, kann man deren zwei verwenden, wovon der eine Natriumhydroxid, der andere Calciumchlorid enthält, und beide in einem noch grösseren Behälter aus Stahl anordnen. Im Falle eines grösseren Gebäudeschadens, etwa bei einem Brand, würde das Bersten der Behälter eine geringere Bedrohung der Umwelt darstellen, weil sich die beiden Stoffe miteinander mischen würden und dabei Natriumchlorid und Calciumhydroxid bilden würden, die wesentlich weniger aggressiv sind.

Im übrigen lassen sich die benötigten Teile der ganzen Einrichtung auf verschiedene Weise in dem zu beheizenden Komplex anordnen. Man kann bei einem Wohnhaus das optische System mit dem Behälter 10 auf einem flachen Dach installieren. Zur Verstellung der Spiegel, entsprechend der Bewegung der Sonne, kann man bekannte Führungsmechanismen für Sonnenenergiesammler verwenden. Zur Unterbringung der Behälter 30 und 40 kann man zwischen zwei bewohnten Stockwerken eines Wohnhauses ein Zwischenstockwerk von nur etwa Im Höhe vorsehen. In diesem Fall würde diejenige Wärme, die nicht auf das Wasser des Zentralwarmwasserheizungssystems übergeht und welche normalerweise verloren wäre, doch noch über den Boden des darüberliegenden Stockwerks oder durch die Decke des darunterliegenden Stockwerks in zu beheizende Wohnräume gelangen. Der Behälter 20 kann unter dem zu beheizenden Gebäude im Erdboden oder in einem danebenliegenden Grundstück im Erdboden oder oberirdisch angeordnet sein.

Die Betätigung der Ventile würde man selbstverständlich über ein automatisches System bewirken. Ausserdem ist es natürlich zweckmässiger, statt der nur aus zeichnerischen Gründen gewählten einseitigen Berührungsfläche der Behälter 30 und 40, vorzusehen, dass der Behälter 40 den Behälter 30 weitgehend umschliesst, damit ein leichterer Wärmeübergang stattfindet und die Wärmeverluste geringer werden.

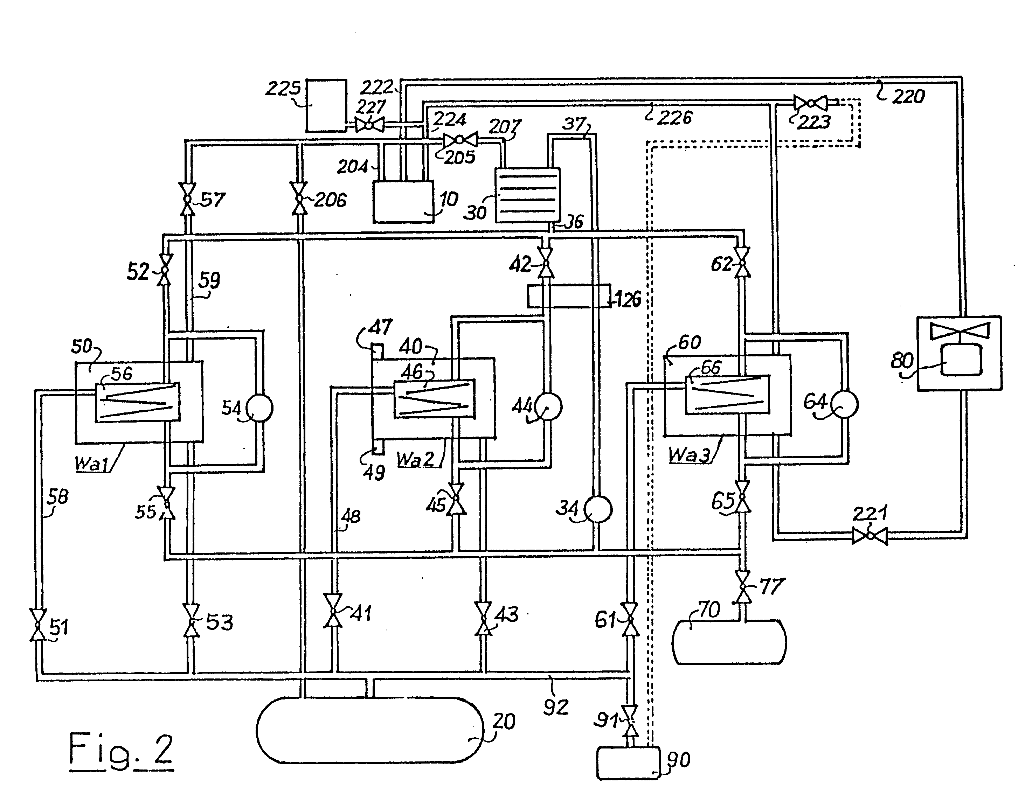

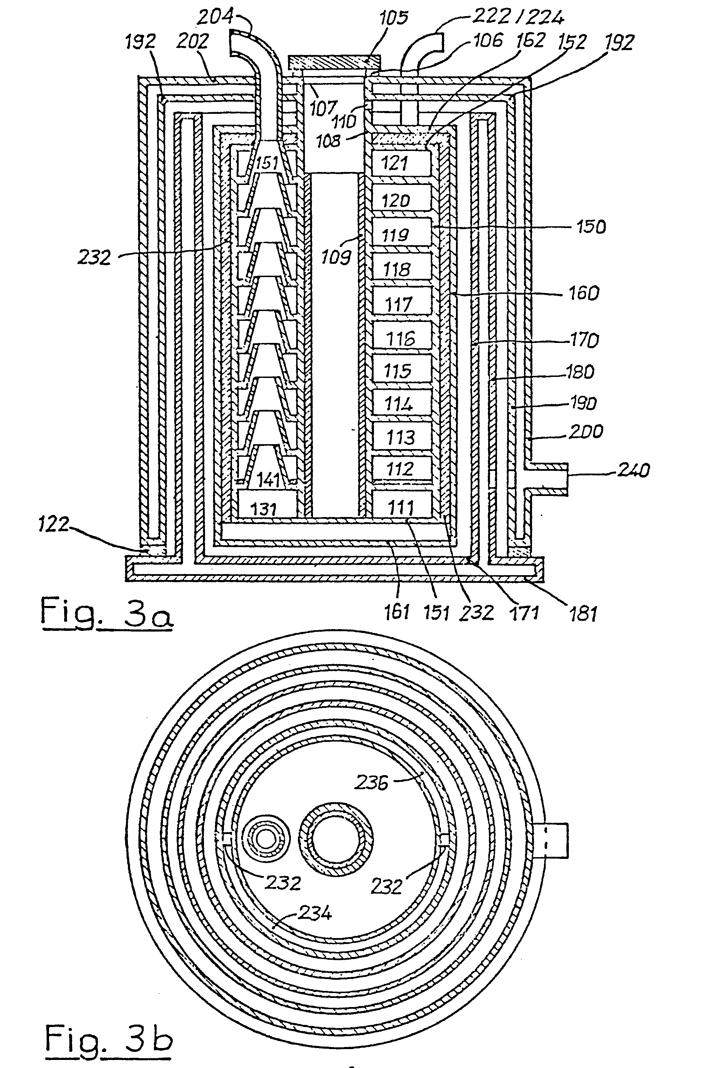

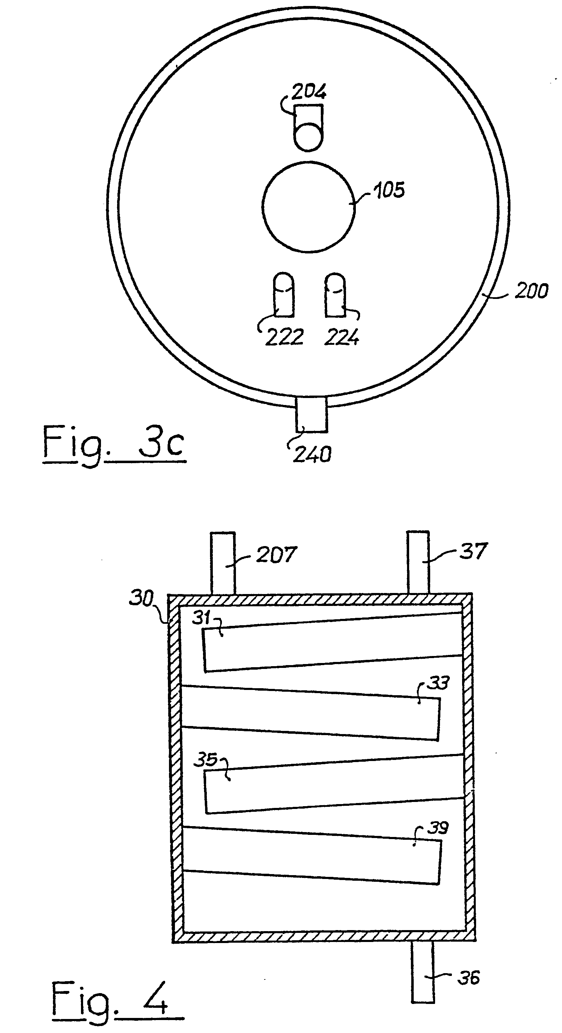

In Fig. 2 ist die Ausführung einer verfeinerten Wärmespeicheranlage dargestellt, in Fig. 3 der Behälter 10 in seinen Einzelheiten und in Fig. 4 der Behälter 30 in seinen Einzelheiten. Die Sonnenstrahlen werden durch einen Hohlspiegel oder eine Sammellinse fokussiert und treten durch die Quarz-Glasplatte 105 (in Fig. 3a, b, c) in das Innere des Behälters 10 ein. Die Quarz-Glasplatte 105 liegt vermittels eines Abdichtringes 106 aus Silicongummi auf dem oberen Ende 107 eines geraden Rohrstückes 108 auf. Im unteren Teil des Rohres ist das Rohr innenseitig mit einer dicken Kupferschicht 109 belegt, die etwa galvanisch aufgetragen sein kann. Der Raum im Innern des Rohrs 108 ist möglichst luftleer, auch frei von Wasserdampf und steht über das Loch 110 mit dem zwischen den Decken 162 und 192 befindlichen Raum in Verbindung. Das Rohr 108 ist von elf übereinanderliegenden Etagen 111 bis 121 umgeben. Jede Etage besitzt in der oberen Abdeckung ein Loch und ein daran angesetztes nach oben geführtes kurzes konisches Rohrstück, z. B. Etage 111 das Loch 131 mit dem kurzen Rohrstück 141. Die Etagen sollen etwa bis zu 90 % ihres freien Innenraumes mit Calciumhydroxid gefüllt werden, dem etwas Eisenroststückchen zugemischt sind. Die Etagen 111 bis 121 sind luftdicht durch die zylindrische Wand 150, den Boden 151 und die Decke 152 gegen den umliegenden Raum abgedichtet. Die zylindrische Wand 160, der Boden 161 und die Decke 162 umschliessen den von den Etagen gebildeten zylindrischen Raum. Der Raum zwischen den Wänden 150 und 160 und den Decken 152 und 162 ist durch eine Trennwand 232 in zwei symetrische Hälften geteilt. In die vordere Hälfte 234 mündet das Eingangsrohr 222, in die hintere Hälfte 236 das Ausgangsrohr 224. Die Trennwand setzt sich nicht bis in den zwischen den beiden Böden 151 und 161 liegenden Raum fort. Die beiden zylindrischen Wände 170 und 180 bilden zusammen mit den Böden 171 und 181 ein Isoliergefäss, ein sogenanntes Dewar-Gefäss, ebenso die zylindrischen Wände 190 und 200 mit den Decken 192 und 202. An der zylindrischen Wand 200 ist ein Rohrstutzen 240 angesetzt. An dieser Stelle sind die zylindrischen Wände 180, 190 und 200 durch ein Loch durchbrochen, dessen Mittelachse mit der Mittelachse des Rohrstutzens 240 zusammenfällt. Der Rohrstutzen 240 soll an eine Vakuumpumpe angeschlossen werden, damit bei geringfügigen Undichtheiten trotzdem ein Vakuum aufrechterhalten werden kann. Die Böden der Etagen sollen durch Auftragschweissung mit einer dicken Kupferschicht bedeckt sein. 122 ist eine Silicongummidichtung.

Die in das Rohr 108 einfallenden Sonnenstrahlen erzeugen in demselben eine starke Hitze, welche durch die Kupferschicht 109 in senkrechter Richtung und durch den Kupferbelag der Etagenböden in horizontaler Richtung verteilt wird. Der Kupferbelag ist in Fig. 3 nur für eine Etage 112 eingezeichnet. Das Calciumhydroxid erhitzt sich und bildet im luftleeren Raum, bei etwa 320 °C, Calciumoxid und Wasserdampf. Dieser gelangt über die kurzen konischen Rohre 141 und darüberliegende, das Austrittsrohr 204 und das Ventil 206 (Fig. 2) in den Behälter 20 und kondensiert sich dort. Dieser Behälter kann im Erdboden eingegraben sein. Die Ventile 57 und 205 sind hierbei gesperrt. Wenn gegen Abend die Sonnenstrahlung so schwach wird, dass keine Zersetzung mehr stattfindet, so wird das Ventil 206 gesperrt und das Ventil 205 geöffnet. Der Behälter 10 ist jetzt über die Rohrleitung 207 mit dem Behälter 30 verbunden. Beide Behälter sind luftleer. Der Behälter 30 enthält in seinem Innern eine grosse Zahl kleinerer Behälter, die jeder für sich gesehen nach oben offen sind. Der Uebersicht wegen sind in Fig. 4 nur vier kleine Behälter 31, 33, 35 und 39 eingezeichnet. In diesen ist die hygroskopische Masse verteilt. Wenn die Einrichtung noch keine Wärme gespeichert hat, besteht diese Masse aus hygroskopischer Lösung. Im vorliegenden Fall soll dies Natriumhydroxidlösung sein. Diese Lösung hat bei den vorkommenden Temperaturen einen merklichen Wasserdampfdruck und es fliesst daher Dampf in die Etagenräume des Behälters 10, wo er vom Calciumoxid sofort gebunden wird und Hydroxid entsteht, so dass ständig wieder Wasserdampf nachströmt. Die Konzentration der Natriumhydroxidlösung nimmt also zu. Im Behälter 10 entsteht Hitze, während im Behälter 30 die Lösung sich abkühlt. Der Ventilator 80 wird eingeschaltet und erzeugt einen Luftstrom. Dieser fliesst über die Leitung 220, das Eingangsrohr 222, in den durch die Trennwand 232 begrenzten vorderen Teil 234 des Zwischenraumes zwischen 150 und 160 nach unten. Der Luftstrom gelangt zwischen die Böden 151 und 161 und steigt in dem in Fig. 3b nach hinten gelegenen Teil 236 des Zwischenraumes zwischen 150 und 160 wieder hoch. Auf diesem Weg hat er von der Calciumhydroxidbildung erzeugte Wärme aufgenommen. Der Luftstrom gelangt in das Ausgangsrohr 224 und fliesst über die Rohrleitung 226 in den Behälter 60. Die Ventile 221 und 61 sind geöffnet, die Ventile 223, 62 und 65 sind gesperrt. Die Luft umspült im Behälter 60 die Aussenwand eines Behälters 66 und erhitzt ihn. Im Innern dieses Behälters wird mit Hilfe einer Pumpe 64 hygroskopische Lösung über leicht geneigte Blechtafeln geleitet, sodass die Lösung eine grosse freie für die Verdampfung günstige Oberfläche bildet. Durch die vom Behälter 66 aufgenommene Hitze wird Wasserdampf aus der Lösung ausgetrieben. Dann kondensiert sich der Wasserdampf im Behälter 20 und die Konzentration der Lösung im Behälter 66 nimmt zu. Wenn ein ausreichender Konzentrationsgrad erreicht ist, wird das Ventil 61 geschlossen, das Ventil 65 geöffnet und die Pumpe 34 in Betrieb genommen, sodass die Lösung über die Leitung 37 von oben in den Behälter 30 einfliesst. Dann wird das Ventil 65 geschlossen, die Pumpe 34 ausgeschaltet und das Ventil 62 geöffnet. Vom Behälter 30 fliesst verdünnte Lösung in den Behälter 66. Diese Lösung wird in gleicher Weise konzentriert und in den Behälter 30 zurückgepumpt. Wenn im Laufe der Zeit durch Wasserentziehung die Lösung im Behälter 30 nahezu gesättigt ist, ist ein weiteres Konzentrieren im Behälter nicht mehr möglich, weil eine starke konzentrierte Lösung beim Zurückfliessen über die Leitung 36 sich abkühlen, festes Hydrat ausscheiden und das Rohr verstopfen kann. In diesem Fall soll der Luftstrom die durch Calciumhydroxid erzeugte Wärme abführen und kann über das Ventil 223 ins Freie geblasen werden.

Man kann die Wärme, welche beim Kondensieren des bei der Calciumhydroxidzersetzung gebildeten Wasserdampfes frei wird, zum Konzentrieren von ungesättigter Lösung verwenden. Es sind zwei Funktionsweisen möglich. Die erste ist folgende : Das Ventil 57 wird geöffnet. Die Ventile 205, 206 und 55 werden gesperrt. Das Ventil 52 wird geöffnet bis eine gewisse Menge von verdünnter Lösung in den Behälter 56 eingelaufen ist und wieder geschlossen. Die Pumpe 54 wird eingeschaltet, sodass die Lösung über die eingebauten, leicht geneigten Blechtafeln fliesst und eine grosse freie Oberfläche bildet. Der Wasserdampf, welcher bei der Zersetzung des Calciumhydroxids im Behälter 10 frei wird, kondensiert sich an den Aussenwänden des Behälters 56 und erhitzt diesen und die darin enthaltene Lösung. Aus dieser wird Wasser als Dampf ausgetrieben, fliesst über das Ventil 51, das jetzt geöffnet ist und kondensiert sich im Behälter 20. Nach beendeter Zersetzung des Calciumhydroxids, wird das Ventil 51 gesperrt. Wenn im Laufe der Zeit durch Wasserentziehung die Lösung im Behälter 30 nahezu gesättigt ist, soll das Ventil 57 gesperrt und das Ventil 206 geöffnet werden, sodass der Wasserdampf direkt in den Behälter 20 gelangt und dort kondensiert.

Da der von der Calciumhydroxidzersetzung stammende Wasserdampf die Natriumhydroxidlösung auf ungefähr 60 bis 80 °C aufheizen muss, liegt auch die Temperatur, bei der er kondensiert, entsprechend hoch, infolgedessen auch sein Dampfdruck. Daher erhöht sich auch die Temperatur, bei welcher das Calciumhydroxid sich zersetzt, um za. 50 bis 100 °C, also auf za. 380 °C. Diesen Nachteil vermeidet man bei der nachstehenden zweiten Funktionsweise.

Die Einstellung der Ventile ist die gleiche, ausgenommen dass das Ventil 53 geöffnet ist. Der von der Hydroxidzersetzung stammende Wasserdampf gelangt über das Ventil 57 in den Wärmeaustauscher Wa 1 und kühlt sich an den Aussenwänden des Behälters 56 von za. 300 °C auf za. 80 °C ab. Nur die durch diese Abkühlung übertragene Wärme wird hier zum Erhitzen und zum Austreiben von Wasserdampf aus der Lösung benutzt. Der Wasserdampf fliesst durch das Ventil 53 in den Behälter 20 und kondensiert erst hier. Dieser Behälter ist sehr gross und seine Temperatur wird durch die relativ geringe Dampfmenge nur wenig erhöht. Es stellt sich daher ein niedriger Dampfdruck ein und die Zersetzungstemperatur des Calciumhydroxids ist niedriger.

Zur Entnahme von Wärme sollen die Ventile 42, 52 und 62 gesperrt sein. Die Pumpe 34 wird eingeschaltet, das Ventil 45 geöffnet und Lösung aus dem Wärmeerzeugungsbehälter 46 in den Behälter 30 gepumpt. Durch Auflösen von fester hygroskopischer Masse geht sie in nahezu konzentrierte Lösung über. Sie wird dann durch Oeffnen des Ventils 42 in den Wärmeerzeugungsbehälter 46 einlaufen gelassen, nachdem vorher die Pumpe 34 ausgeschaltet und das Ventil 45 gesperrt wurde. Die Pumpe 44 wird eingeschaltet und die konzentrierte Lösung fliesst im Innern des Wärmeerzeugungsbehälters 46 über mehrere leicht geneigte Flächen, sodass die Lösung eine für die Kondensation günstige grosse freie Fläche bildet. Das Ventil 41 wird geöffnet, das Ventil 42 gesperrt, und es fliesst Wasserdampf aus dem Behälter 20 in den Wärmeerzeugungsbehälter 46. Er kondensiert sich, verdünnt die Lösung und erhitzt diese. Die Wärme wird über die Aussenwand des Wärmeerzeugungsbehälters 46 an das ihn umspülende Wasser einer Zentralwarmwasserheizungsanlage übertragen. Die Anschlussrohre für die Zufuhr des Heizungswassers sind mit den Bezugszeichen 47 und 49 gekennzeichnet. Der Behälter 30 muss sehr gross dimensioniert werden, da er eine grosse Wärmespeichermasse in Form von Hydroxid, Hydrat oder Lösung aufnehmen muss. Die im Behälter 40 vorhandene Menge an Lösung ist demgegenüber sehr klein. Normalerweise würde diese geringe Menge nach dem Einpumpen in den Behälter 30 in der grossen hygroskopischen Masse versickern und keine Lösung mehr herauskommen. Um dies zu vermeiden, kann man den Behälter 30 in mehrere Behälter unterteilen, etwa einen kleinen, einen mittleren und einen grossen. Zuerst wird die Masse des kleinen, dann die des mittleren und zuletzt die des grossen Behälters benutzt. Wenn mit der Benutzung des grossen Behälters begonnen wird, hat man die wesentlich grössere Menge an Lösung zur Verfügung, die durch die Benutzung des mittleren Behälters entstanden ist.

Eine andere Lösung dieser Schwierigkeit besteht darin, dass man die Leitung 37 an der Unterseite des Bodens des Behälters 30 anschliesst. An der Eintrittsstelle der Leitung in den Behälter soll eine Kugel aus Stahl, Kupfer oder alkalifestem Kunststoff aufliegen. Sie soll von einem Gummikörper überdeckt sein, der die Form einer unten sehr breiten Glocke hat. Wenn der Behälter Lösung enthält, drückt diese den Gummikörper, mit dem äusseren Rand der Glockenform, dicht auf die Bodenfläche auf. Der übrige Teil des Gummikörpers wird nicht auf den Boden aufgedrückt, behält also die Glockenform bei, weil er von der Kugel gestützt wird. Eine geringe unter dem Gummikörper befindliche Menge von Lösung kann unter die Kugel in die Leitung ablaufen, da die Kugel das Leitungsende nicht dicht abschliesst. Die Pumpe 34 soll eine Pumpe sein, welche die Lösung unter einen Druck von einer Atmosphäre setzen kann. Wenn sich nun nach längerer Wärmespeicherung die Lösung im Behälter 30 in eine dicke Schicht fester Hydrate umgewandelt hat und die Wärmeentnahme erfolgen soll, so wird bei Einschaltung der Pumpe 34 ein Druck von einer Atmosphäre unter dem Gummikörper erzeugt. Wenn der Gummikörper im unten aufliegenden Teil einen Durchmesser von etwa 0,60 m hat, so wirkt auf die darüberliegende Hydratschicht eine Kraft von $0,3 \cdot 0,3 \cdot 3,14 \cdot 10^4$ kg = 2 826 kg. Die Hydratschicht wird etwas vom Behälterboden abgehoben und Lösung hineingepumpt. Damit man auch Lösung wieder abfliessen lassen kann, kann man einen hydraulischen Zylinder so anbringen, dass er den Rand des Gummikörpers hochhebt.

Der in der Beschreibung mit Wa 1 bezeichnete Wärmeaustauscher wird durch die Behälter 50 und 56, der Wärmeaustauscher Wa 2 durch den Behälter 40 und den Wärmeerzeugungsbehälter 46, der Wärmeaustauscher Wa 3 durch die Behälter 60 und 66 gebildet.

In sämtlichen Behältern und Rohrleitungen soll ein von Luft freies Vakuum aufrecht erhalten werden, ausser in den Rohrleitungen 220 und 226 und dem an diese angeschlossenen Raum im Behälter 10. Zu diesem Zweck ist eine Vakuumpumpe 90 über ein Ventil 91 an die Rohrleitung 92 angeschlossen und kann bei Bedarf in Funktion treten. Auch der Rohrstutzen 240 wird an diese Vakuumpumpe angeschlossen.

Die Behälter, Rohrleitungen, Ventile und sonstige Armaturen können aus Stahl oder Kupfer hergestellt werden. Die der Hitze ausgesetzten Wände des Behälters 10 sollen aus entsprechend temperaturbeständigem Stahl, z. B. rostfreiem Stahl, hergestellt sein.

Es ist vorteilhaft, im Wärmeerzeugungsbehälter 46 eine Lösung von 0,52 Gewichtsanteil NaOH durch Wasserdampfaufnahme in solche von 0,42 Gewichtsanteil NaOH umzuwandeln und diese dann durch neue Lösung von 0,52 Gewichtsanteil zu ersetzen.

Man könnte bei einer ersten kritischen Beurteilung des Verfahrens zu der Auffassung gelangen, dass es eigentlich keinen Zweck habe, die verdünnte « verbrauchte » Lösung bei der Wärmespeicherung bis zum festen Hydrat zu entwässern, wenn dieses vor dem eigentlichen wärmeerzeugenden Prozess in eine Lösung von 0,52 Gewichtsanteil NaOH umgewandelt wird. Dann könne man auch gleich die Lösung in der richtigen, benötigten Konzentration herstellen. In Wirklichkeit spart man viel Lagerraum für die verdünnte Lösung und benötigt weniger Natriumhydroxid, wie sich aus folgendem ergibt.

In Anwendung des erfindungsgemässen Verfahrens kann man 1 kg konzentrierte Lösung mit 0,52 Gewichtsanteil NaOH herstellen, aus 0,629 kg einer Lösung, die 0,42 Gewichtsanteil NaOH enthält, der man durch Einleiten in den Behälter 30 0,370 8 kg Natriumhydroxid-Hydrat zusetzt. Durch Wasserdampfabsorption entsteht bei der Wärmeentnahme daraus eine Menge von 1,238 kg einer Lösung mit 0,42 Gewichtsanteil NaOH. Davon werden 0,629 kg zur Herstellung von 1 kg neuer Lösung von 0,52 Gewichtsanteil NaOH verwendet, indem 0,370 8 kg Natriumhydroxid-Monohydrat aufgelöst werden, welche 0,255 7 kg NaOH enthalten.

Wenn aber die Wärmespeichereinrichtung die verdünnte Lösung nur bis zu einer Lösung von 0,52 Gewichtsanteil NaOH entwässert, so muss für jedes kg Lösung mit 0,52 Gewichtsanteil NaOH, das durch Wasserdampfkondensation in Lösung von 0,42 Gewichtsanteil verwandelt wird, auch eine Menge von 0,52 kg NaOH zur Verfügung stehen.

Man braucht also bei der Installation einer Anlage von gleicher Speicherkapazität die doppelte Menge an Natriumhydroxid und die doppelte Behältergrösse zum Lagern der verdünnten Lösung, wenn man letztere nur bis zu einer Konzentration von 0,52 Gewichtsanteil NaOH entwässert, anstatt bis zum festen Monohydrat. Die Erklärung für diese überraschende Feststellung liegt darin, dass ein Teil der verbrauchten Lösung ein zweites Mal den Wärmeentwicklungsprozess mitmacht.

Denjenigen Teil der verdünnten Lösung, welcher nicht zur Herstellung neuer konzentrierter Lösung benötigt wird, kann man durch Oeffnen des Ventils 77 in den Behälter 70 zwecks Lagerung abfliessen lassen.

Die vorstehende Rechnung basiert auf der Annahme, dass die Herstellung neuer konzentrierter Lösung nur periodisch erfolgt, nachdem die im Wärmeerzeugungsbehälter 46 sich verdünnende Lösung einen gewissen Verdünnungsgrad erreicht hat. Es dürfte vorteilhafter sein, wenn kontinuierlich neue konzentrierte Lösung aus dem Behälter 30 in den Wärmeerzeugungsbehälter 46 zufliesst. Für diese Betriebsart erscheint es aber unerlässlich, dass die aus dem Wärmeerzeugungsbehälter 46 kommende wärmere Lösung ihre Wärme über einen Wärmeaustauscher 126 an die aus dem Behälter 30 kommende kältere Lösung überträgt. Dieser Wärmeaustauscher sollte zweckmässigerweise am besten nach dem Gegenstromprinzip arbeiten.

In Fig. 2 ist der Behälter 225 über ein Ventil 227 mit dem Ausgangsrohr 224 verbunden. Er enthält Wasser und ist von Luft evakuiert. Während der Arbeitsphase, in der Calciumoxid in Calciumhydroxid umgewandelt wird, kann man das Ventil so einstellen, dass Wasser sehr langsam, zum Beispiel tropfenweise, in das Ausgangsrohr 224 gelangt und infolge der Schwerkraft in den Raum zwischen den Decken 162 und 152 und die zylindrischen Wände 160 und 150 fliesst. Hier verdampft es normalerweise sehr schnell, sodass die Decken oder Wände nur kurzzeitig durch kleine Spritzer benetzt werden. Der Dampf gelangt über die Rohrleitung 226 in den von den Behältern 60 und 66 gebildeten Wärmeaustauscher, wo er sich kondensiert und Wärme an den Behälter 66 abgibt. Hierbei ist das Ventil 61 geöffnet, während die Ventile 221, 62 und 65 gesperrt sind. Das Ventil 223 ist, wie durch die punktierten Linien angegeben, mit der Vakuumpumpe 90 verbunden, welche die so in Verbindung stehenden Rohre und Behälter von Luft evakuiert. Diese Anordnung ist eine Alternative zur Verwendung des Ventilators 80, der Luft zur Wärmeübertragung benutzt.

In Fig. 2 wird bei Betrieb der Pumpe 34 Lösung durch die Rohrleitung 37 von oben in den Behälter 30 einlaufen gelassen. Wie in Fig. 4 ersichtlich, sind im Innern kleinere Behälter schräg gegeneinander geneigt so untergebracht, dass die Lösung zuerst in den oberen Behälter einläuft. Ueberlaufende Lösung fliesst von jedem Behälter in den jeweils darunterliegenden. Vom untersten gelangt die Lösung auf den Boden des Hauptbehälters 30. Diese Anordnung ermöglicht eine gleichmässige Verteilung der sich bildenden festen Hydrate in den kleineren Behältern, wenn im Sommer Wärme gespeichert wird. Man kann dann die Pumpe 34 dazu benutzen, um periodisch in grösseren Zeitabständen Lösung aus dem Behälter 70 in den Behälter 30 zu pumpen. Dabei werden alle Behälter gleichmässig bis zum Ueberlaufen gefüllt.

Man kann die Anlage, mit Rücksicht auf die hohen Investitionskosten, auch kleiner bemessen, so dass nur einer Bruchteil der im Winter benötigten Wärme im Sommer gespeichert werden kann. Bei der Benutzung ergibt es sich dann, dass der Wärmespeicher im Laufe des Jahres mehrmals gefüllt und geleert wird, d. h., dass seine Speicherkapazität mehrere Male im Jahr ausgenützt wird. Dies bedeutet, dass die Anlage rentabler arbeitet, wenn sie kleiner bemessen ist und durch eine zusätzliche konventionelle Heizung ergänzt wird.

Bei den bisher beschriebenen Ausführungen entstehen sehr hohe Investitionskosten, weil die sehr grossen Stahlbehälter für die Aufnahme der hygroskopischen Substanz, des Wassers und der daraus entstehenden Lösung sehr teuer sind, wesentlich teurer als ihr Inhalt. Die Blechstärke muss sehr gross gewählt werden, weil diese Behälter luftleer sind und den atmosphärischen Druck aushalten müssen. Eine wesentliche Verbilligung ist möglich, indem man den Behälter 20 für das Wasser in einen kleinen und einen grossen Behälter aufteilt. Nur der kleine soll luftleer sein und muss aus entsprechend starkem Stahlblech gefertigt sein. Die Innenseite des grossen Behälters steht über ein Loch in der Wandung mit der Aussenluft in Verbindung, kann also aus dünnerem Stahlblech bestehen. Die beiden Behälter sind durch zwei Rohrleitungen mit je einer Pumpe miteinander verbunden. Im kleinen Behälter ist ein Wasserstandsfühler angebracht, der, wenn nötig, über eine Reguliereinrichtung die eine oder die andere Pumpe einschaltet, so dass der Wasserstand ein bestimmtes Niveau behält. Dabei soll die eine Pumpe Wasser vom kleinen in den grossen Behälter und die andere Pumpe Wasser vom grossen in den kleinen Behälter pumpen. Entsprechendes gilt für den Behälter 70. Den grossen Behälter kann man sparen, wenn man das benötigte Wasser der Wasserleitung entnimmt. In diesem Fall, kann der durch Zersetzung des Calciumhydroxids gebildete Dampf respektiv das durch dessen Kondensation gebildete Wasser direkt ins Freie anstatt in den Behälter 20 geleitet werden. Der Behälter 20 hat dann nur noch die Funktion, den Dampf zu erzeugen, der im Wärmeerzeugungsbehälter 46 zur Wärmeerzeugung kondensiert wird und in ähnlicher Weise wie eine Wärmepumpe der Umgebung die benötigte Verdampfungswärme zu entziehen.

Gemäss den bisher beschriebenen Verfahren wird nur ein Teil der verdünnten Lösung, die sich im Wärmeerzeugungsbehälter 46 gebildet hat, auf höhere Konzentration gebracht. Nach dem nachstehenden Verfahren kann man die gesamte im Wärmeerzeugungsbehälter verdünnte Lösung auf höhere Konzentration bringen, ohne einen Teil in den Behälter 70 abfliessen zu lassen. Allerdings wird hierbei nicht mehr hygroskopische Masse hinzugefügt, sondern Wasser in Dampfform entzogen.

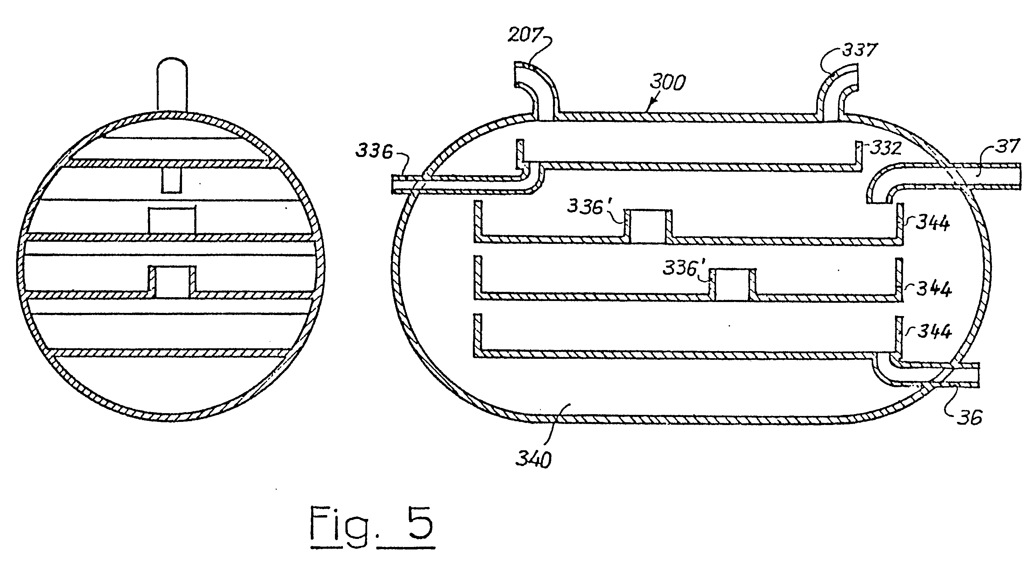

Die hierzu erforderliche Einrichtung besteht gemäss Fig. 5 aus einem Behälter 300, in dem wie in dem oben beschriebenen Behälter 30 die hygroskopische Substanz oder Lösung gelagert wird und der zusätzlich mit einem Behälter 332 in Verbindung steht, der eine andere Lösung einer anderen hygroskopischen Substanz in Wasser enthält, wobei die im Behälter 300 befindliche Substanz oder Lösung mit der im Behälter 332 befindlichen Lösung über die Dampfphase in Verbindung steht, und wobei die Anordnung der Behälter so getroffen ist, dass eine gute wärmeleitende Verbindung zwischen dem Inhalt des Behälters 300 und der Lösung des Behälters 332 besteht.

Der Zweck der guten wärmeleitenden Verbindung ist, dass die Wärme, welche bei der Kondensation von Wasserdampf entsteht und den Inhalt des Behälters 300 erhitzt, auf die Lösung des Behälters 332 übergeht, da sich die letztere sonst zu stark abkühlen würde, weil ihr Wasser als Dampf entzogen wird, wobei Wärme verbraucht wird.

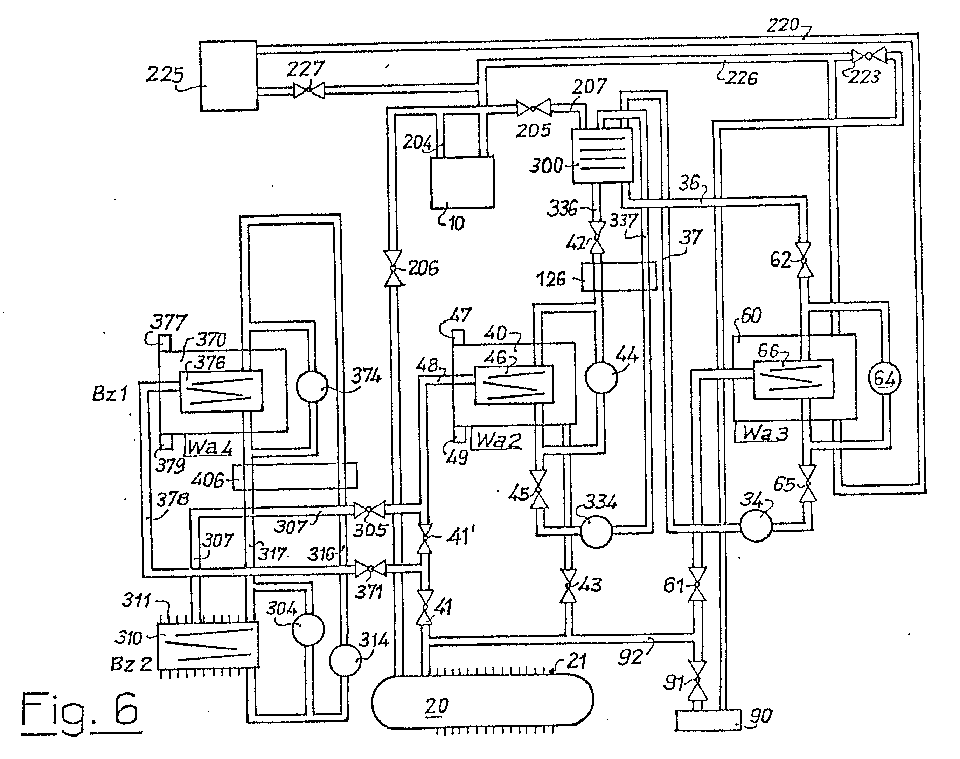

Der Behälter 300 enthält im Ausführungsbeispiel eine grössere Zahl kleinerer übereinander angeordneter Behälter 344, welche Natriumhydroxid oder Natriumhydroxid-Hydrat enthalten. In der Fig. 5 sind zur besseren Uebersicht nur drei dargestellt. Die zwei oberen Behälter 344 besitzen in ihrer Bodenfläche ein kurzes senkrechtes Rohr 336', das durch ein passendes Loch im Behälterboden durchgesteckt und durch eine Schweissung dicht mit diesem Boden verbunden ist. Der obere Rand des Rohres liegt tiefer als der obere Rand des betreffenden Behälters, und die Rohrstücke sind seitlich gegeneinander versetzt, so dass beim Einlaufen von Natriumhydroxidlösung durch die Rohrleitung 37 in den oberen Behälter 344 diese Lösung durch das betreffende Rohrstück in den darunterliegenden Behälter überläuft. Ausserdem enthält der Behälter 300 den Behälter 332, der über den Behältern 344 angeordnet ist und eine Lösung von Lithiumbromid enthält. Auch der Wärmeerzeugungsbehälter 46 enthält diese Lösung, und die zusätzliche Pumpe 334 bewirkt in einem Kreislauf entsprechend Fig. 6 ein langsames Umlaufen der Lösung aus dem Behälter 332 über das Rohr 336 und das Ventil 42, den Wärmeaustauscher 126, den Wärmeerzeugungsbehälter 46, das Ventil 45, die zusätzliche Pumpe 334, den Wärmeaustauscher 126 und das Rohr 337 zurück in den Behälter 332. Ausserdem bewirkt die Pumpe 44 ein schnelleres Umlaufen der im Wärmeerzeugungsbehälter 46 befindlichen Lösung, damit die innen angebrachten, schrägliegenden Flächen möglichst gut von Flüssigkeit benetzt werden und eine für die Kondensation günstige grosse freie Fläche gebildet wird. Die Leitungen 36 und 37 sowie 207 haben, abgesehen von dem jetzt abgetrennten Kreislauf über den Wärmeerzeugungsbehälter 46, dieselbe Funktion wie bei dem Ausführungsbeispiel nach Fig. 2.

Wenn die Anlage nicht in Betrieb ist, sind alle Ventile gesperrt. Wenn Wärme benötigt wird, werden die Ventile 41, 41' und 42 geöffnet und die Pumpe 334 sowie die Pumpe 44 eingeschaltet. Vom Behälter 20 gelangt Wasserdampf über die Ventile 41 und 41' und das Rohr 48 in den Wärmeerzeugungsbehälter 46. Die Lithiumbromidlösung hat einen niedrigen Dampfdruck, absorbiert Wasserdampf, verdünnt und erhitzt sich und gibt Wärme über die Wände des Wärmeerzeugungsbehälters 46 an das im Behälter 40 zirkulierende Wasser einer Warmwasserzentralheizung ab. Dabei nimmt die Konzentration der Lösung etwas ab. Der von der zusätzlichen Pumpe 334 bewirkte langsame Umlauf der Lösung bewirkt, dass trotz der ständigen Verdünnung die Konzentration aufrechterhalten wird. Im Behälter 300 fliesst die Lösung über die grosse Bodenfläche des Behälters 332. Dabei wird ihr Wasser in Form von Dampf entzogen, da ihr Dampfdruck höher ist als der des Natriumhydroxids bzw. des Hydrats oder der Lösung in den Behältern 344. Dort wird der Wasserdampf absorbiert und erhitzt sich. Die Wärme gelangt über den Boden der Behälter 344, die Wand des Behälters 300 und den Boden des Behälters 332 in die Lithiumbromidlösung. Damit wird die Wärme ersetzt, welche die Lithiumbromidlösung durch Bildung von Wasserdampf verloren hat.

Im Wärmeerzeugungsbehälter 46 muss ausreichend Lösung vorhanden sein, damit die Pumpe 44 genug Flüssigkeit über die schrägliegenden Flächen leiten kann. Andererseits soll das Niveau der Flüssigkeit aber auch nicht zu hoch sein, d. h. diese schrägen Flächen dürfen nicht unter dem Flüssigkeitsspiegel liegen. Ein einfaches Mittel hierzu besteht darin, die Behälter so aufzustellen, dass der Flüssigkeitsspiegel im Behälter 332 die gleiche Höhe hat wie der auf richtige Höhe eingestellte Flüssigkeitsspiegel im Wärmeerzeugungsbehälter 46.

Auf dem Boden des Behälters 300, unterhalb der Behälter 344, kann Calciumchlorid gelagert sein, um, wie oben bereits erwähnt, die Gefahr von Unfällen zu begrenzen.

Die beschriebene Anlage eignet sich gut, wenn die Aussentemperatur bei 0 °C oder tiefer liegt. Ist die Aussentemperatur dagegen 5 oder 10 °C, so kann die Grösse der sehr teuren Behälter, welche die verdünnte Natriumhydroxid-Lösung und das Wasser aufnehmen, stark verringert und damit an Investitionskosten gespart werden. Dieser Verbesserung liegt der Erfindungsgedanke zugrunde, dass für die Verdünnung der gesättigten Natriumhydroxidlösung das verwendete Wasser zwei Verdampfungsprozesse durchmacht und jedes Mal der Umgebung Wärme entzieht.

Fig. 6 zeigt eine Ausführungsmöglichkeit.

Wenn die Anlage Wärme erzeugt, gelangt bei geöffneten Ventilen 371 und 41 aus dem Behälter 20 Wasserdampf über die Leitung 378 in den Behälter 376, der eine konzentrierte Lösung von Lithiumbromid enthält und kondensiert sich dort.

Dadurch wird der Lithiumbromidlösung Wärme zugeführt, die sie ebenso schnell wieder über die Aussenwände des Behälters 376 an das im Behälter 370 zirkulierende Wasser einer Warmwasserheizungsanlage abgibt. Die Behälter 376 und 370 bilden also einen Wärmeaustauscher Wa 4. Die Pumpe 374 leitet im Behälter 376 die Lithiumbromidlösung im ständigen Kreislauf über mehrere leicht geneigte Flächen, welche eine grosse Kondensationsfläche bilden. Ausserdem bewirkt die Pumpe 314 ein langsames Umlaufen der Lithiumbromidlösung aus dem Behälter 376 über die Rohrleitung 317 in den Behälter 310 und über die Rohrleitung 316 zurück zum Behälter 376. Dabei wird die aus dem Behälter 376 kommende Lösung im Wärmeaustauscher 406 annähernd auf die im Behälter 310 bestehende Temperatur abgekühlt, während die aus dem Behälter 310 in den Behälter 376 zurückkehrende Lösung annähernd auf die im Behälter 376 bestehende Temperatur erhitzt wird. Im Behälter 310 wird der Lösung wieder soviel Wasser entzogen, wie ihr im Behälter 376 durch Kondensation hinzugefügt wurde. Dabei geht das Wasser in Dampfform über, fliesst in dieser Form über die Rohrleitung 307, das Ventil 305, das Rohr 48 in den Behälter 46, welcher gesättigte oder hochkonzentrierte Natriumhydroxidlösung enthält, und kondensiert sich dort. Die Lösung erhitzt sich und gibt die Wärme über die Aussenwände des Wärmeerzeugungsbehälters 46 an das im Behälter 40 zirkulierende Wasser einer Warmwasserzentralheizung ab. Die hier entstehende verdünnte Lösung wird von der Pumpe 334 in den Behälter 300 gepumpt. Von dem in den Heizkörpern abgekühlten Wasser der Zentralwarmwasserheizung soll jeweils etwa die Hälfte über den Rohransatz 49 in den Behälter 40 und über den Rohransatz 379 in den Behälter 370 eintreten und über die Rohransätze 47 respektiv 377 wieder zu den Heizkörpern zurückkehren. Der mit 340 in Fig. 5 bezeichnete untere Raum im Behälter 300 soll Calciumchlorid oder Magnesiumchlorid enthalten. Im Falle des Berstens der Behälter, würden diese Stoffe mit dem Natrium- oder Kaliumhydroxid der darüberliegenden Behälter 344 zusammentreffen und sich zu Stoffen von geringer Umweltschädlichkeit umsetzen.

Das Wasser, das die im Wärmeerzeugungsbehälter 46 zirkulierende hygroskopische Lösung verdünnt, hat somit zwei Verdampfungsprozesse durchgemacht, einen ersten im Behälter 20 und einen zweiten im Behälter 310. Die hierzu erforderliche zusätzliche Einrichtung besteht aus mindestens zwei Behältern, nämlich einem Behälter Bz 2, der anstelle des Behälters 20 den Wasserdampf liefert, welcher im Wärmeerzeugungsbehälter 46 kondensiert wird und der dabei Wärme aus der kalten Umgebung, dem Erdboden oder der Aussenluft aufnimmt, wobei dieser Behälter Bz 2 über die Dampfphase mittels einer Rohrleitung mit dem Wärmeerzeugungsbehälter 46 verbunden ist, sowie durch einen weiteren Behälter Bz 1, der den von dem Behälter 20 gelieferten Wasserdampf aufnimmt und die dabei entstehende Wärme über einen Wärmeaustauscher Wa 4 an die wärmeverbrauchende Heizeinrichtung abgibt, wobei dieser Behälter Bz 1 über die Dampfphase mittels einer Rohrleitung mit dem Behälter 20 verbunden ist, welcher das benötigte Wasser enthält.

Selbstverständlich ist die Anlage nach Fig. 6 auch in Kombination mit dem Wärmeaustauscher Wa 1 nach Fig. 2 möglich.

Von grossem Vorteil ist die Tatsache, dass die zwischen den Behältern 376 und 310 umlaufende Lösung mit der Natriumhydroxidlösung nicht in Berührung kommt. Da sie nur in geringer Menge benötigt wird, kann man aus relativ teuren hygroskopischen Substanzen diejenige auswählen, welche auch bei der im Behälter 310 niedrigen Temperatur von eventuell minus 5 °C noch hohe Löslichkeit in Wasser und eine Lösung mit sehr niedrigem Dampfdruck bildet. Beispielsweise kann man statt Lithiumbromid Lithiumchlorid verwenden. Die genaue Kenntnis der günstigen Konzentration der Lithiumbromidlösung ist nicht nötig, da diese sich von selbst einstellt. Die beiden Behälter 20 und 310 nehmen Wärme aus der Umgebung auf, was durch die angesetzten Striche 311 respektiv 21, welche Kühlrippen darstellen, angedeutet wird.

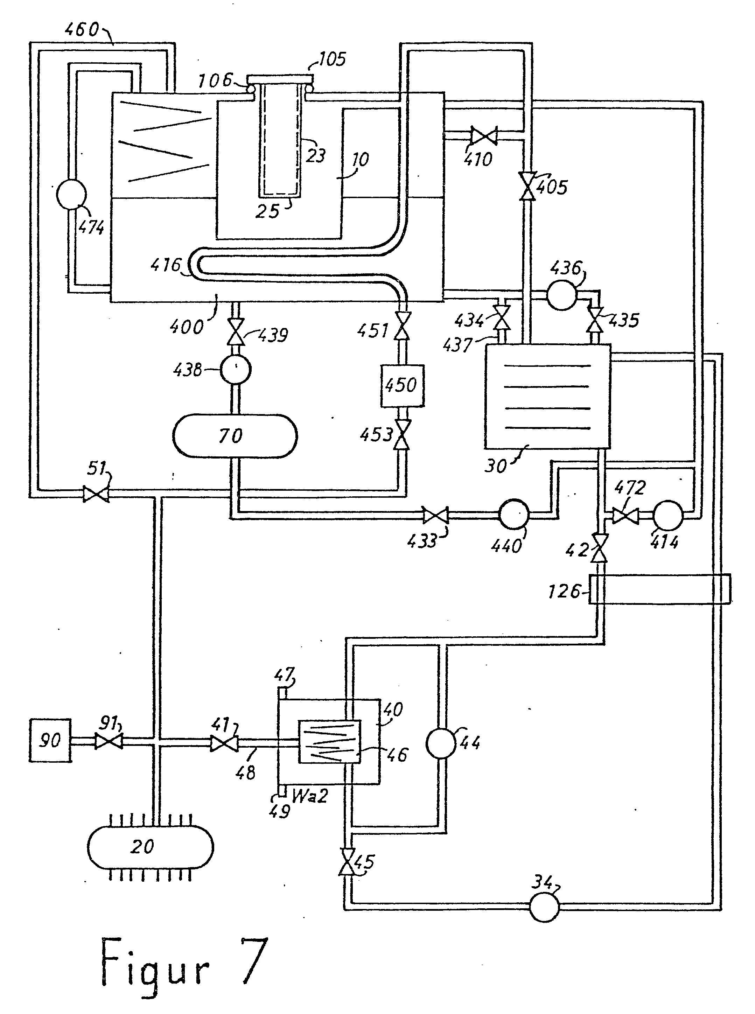

Fig. 7 zeigt eine wesentlich vereinfachte Ausführung. Alle Ventile der Anlage mögen gesperrt sein. Wenn durch einfallende Sonnenstrahlen das Calciumhydroxid im Behälter 10 sich zersetzt, so wird das Ventil 451 geöffnet. Der gebildete Wasserdampf fliesst durch eine Rohrleitung 416, welche sich im Innern des Behälters 400 befindet, gibt Wärme an die Natriumhydroxidlösung ab, welche hier das Rohr umgibt, kondensiert sich und sammelt sich im Behälter 450. Dieser wird von Zeit zu Zeit entleert, indem das Ventil 451 gesperrt und das Ventil 453 geöffnet wird. Die Rohrleitung 416 erfüllt hier die gleiche Funktion wie der Wärmeaustauscher Wa 1 der Fig. 2.

Wenn die Zersetzung des Calciumhydroxids durch Sonnenstrahlen aufhört, wird das Ventil 451 gesperrt und das Ventil 405 geöffnet, und es strömt Wasserdampf aus dem Behälter 30 in den Behälter 10, wo er sich mit dem Calciumoxid zu Calciumhydroxid verbindet. Die freiwerdende Wärme gelangt nach und nach durch die Wände des Behälters 10 in die im Behälter 400 befindliche Lösung. Die Wand des Behälters 10 erfüllt damit die gleiche Funktion wie der Wärmeaustauscher Wa 3, der Ventilator 80 und das angeschlossene Luftkühlsystem der in Fig. 2 dargestellten Ausführung. Durch die der Lösung im Behälter 10 übertragene Wärme wird Wasserdampf aus der Lösung ausgetrieben, welcher nach Oeffnen des Ventils 51 über die Rohrleitung 460 in den Behälter 20 fliesst und dort kondensiert. Durch die Pumpe 474 wird die im Behälter 400 befindliche Lösung über schrägliegende Bleche geleitet und so eine für die Verdunstung günstige grosse Oberfläche erzeugt. Wenn die Lösung im Behälter 400 eine ausreichende Konzentration erreicht hat, wird das Ventil 51 gesperrt, das Ventil 434 geöffnet und die Lösung über das Rohr 437 in den Behälter 30 abfliessen gelassen. Dann wird das Ventil 434 gesperrt, das Ventil 472 geöffnet und mit der Pumpe 414 weitere zu konzentrierende Lösung aus dem Behälter 30 in den Behälter 400 gepumpt. Man kann aber auch nach dem Aufhören der Zersetzung des Calciumhydroxids das Ventil 410 anstatt des Ventils 405 öffnen. In diesem Fall saugt das Calciumoxid den Wasserdampf über der Lösung im Behälter 400 ab, konzentriert diese und bildet Calciumhydroxid. Da diese in dem vorhergehenden Vorgang der Calciumhydroxidzersetzung erhitzt wurde, kann so ein wesentlich höherer Konzentrationsgrad erreicht werden. Die Rohrleitung 437 soll wärmeisoliert und elektrisch beheizbar sein, damit sie sich nicht zu stark abkühlt und durch erstarrte Lösung verstopft wird.

Zur Wärmeentnahme wird das Ventil 42 geöffnet und die dort angeschlossene übrige Anlage arbeitet genau in der gleichen Weise wie beschrieben für Fig. 2.

Die Quarzglasplatte 105, der sich anschliessende zylindrische Teil 23 und der Bodenteil 25 stellen einen zusammenhängenden luftdichten Hohlkörper aus Quarzglas dar, der vorzugsweise luftleer sein sollte. Weiter ist es für eine optimale Ausnutzung der Sonnenstrahlen vorteilhaft, wenn der Durchmesser des unteren Teiles des Zylinders grösser ist als die obere Eintrittsöffnung. Die fokussierten Lichtstrahlen treten in den Quarzglaszylinder und treffen auf die an diesem anliegende Calciumhydroxidschicht. Ein Teil der Strahlen dringt bis zu einer gewissen Tiefe in diese Schicht ein, bevor er sich in Wärmeenergie umsetzt, sodass die Wärmeübertragung im Anfang schneller vonstatten geht. Es ist vorteilhaft den Behälter 10 und die darin enthaltene Menge von Calciumhydroxid so gross zu wählen, dass nur ein Teil des Calciumhydroxids von der im Laufe eines Tages einfallenden Sonnenstrahlung zersetzt werden kann. Der unzersetzte Teil desselben wirkt dann wie eine wärmeisolierende Schicht. Die Verwendung von Lithiumbromidlösung in der Ausführung gemäss Fig. 6 und der Beschreibung auf Seite 21 Zeile 7 bis Seite 23 Zeile 10 hat den Vorteil, dass diese Lösung bei sehr niedrigem Dampfdruck noch als Lösung weiterbestehen kann, wogegen eine Natriumhydroxidlösung bei einem solchen Dampfdruck, gleiche Temperatur vorausgesetzt, nicht in flüssiger Phase weiterbestehen kann, sondern festes Hydrat bildet. Der dort beschriebene Kreislauf über die Behälter 332 und 46, mit Hilfe der Pumpe 334, wäre damit nicht mehr unter Ausnutzung eines niedrigen Dampfdruckes möglich.

Der gemäss den Verfahren zur exothermen Reaktion mit Wasserdampf verwendete hygroskopische Stoff soll so ausgewählt sein, dass bei Bildung einer Lösung durch Zusatz von Wasser mindestens aber von Wasserdampf Wärme frei wird. Hygroskopische Stoffe, welche sich unter Temperaturerniedrigung im flüssigen Wasser auflösen, sind natürlich weniger geeignet. Zumindest muss aber Wärme frei werden, wenn die Bildung von Lösung unter Zugabe von Wasser erfolgt, das in gasförmiger Phase vorliegt.

In der Ausführung gemäss Fig. 7 ist auch folgende Betriebsweise möglich. Alle Ventile mögen gesperrt sein. Der Behälter möge oben irgendwo eine kleine Oeffnung haben, sodass auch im Innern des Behälters der atmosphärische Luftdruck wirksam ist. Wenn nun, wie beschrieben auf Seite 26 Zeile 16 bis 32 die Lösung im Behälter 400 eine ausreichende Konzentration erreicht hat, kann man sie nicht mehr wie vorher über das Rohr 437 in den Behälter 30 abfliessen lassen. Der Luftdruck im Behälter 30 würde die Lösung zurücktreiben. Daher wird das Ventil 435 geöffnet, während das Ventil 434 gesperrt bleibt. Gleichzeitig wird die Pumpe 436 eingeschaltet und pumpt konzentrierte Lösung aus dem Behälter 400 in den Behälter 30. Die Pumpe wird abgeschaltet, das Ventil 435 gesperrt. Das Ventil 472 wird geöffnet und mit der Pumpe 414 weitere zu konzentrierende Lösung aus dem Behälter 400 gepumpt. Wenn ausschliesslich diese Betriebsweise angewendet wird, braucht der Behälter 30 nicht von Luft evakuiert zu sein. Dieser kann in dünner Blechstärke hergestellt und damit wesentlich billiger sein. Auch das Anbringen kleinerer Behälter 31, 33, 35, 39 im Behälter 30 gemäss Fig. 4 ist damit überflüssig. Ausserdem kann man den Behälter 30 so klein wählen, dass er nur das durch Wasserentziehung aus Natriumhydroxidlösung gewonnene Produkt aufnehmen kann. Die bei der Wärmeentnahme im Winter entstehende verdünnte Lösung nimmt einen grösseren Raum ein und wird nach Oeffnen des Ventils 439 mit der Pumpe 438 in den Behälter 70 gepumpt, der ebenfalls nicht luftleer zu sein braucht. Bei der Wärmespeicherung im Sommer wird nach Oeffnen des Ventils 433 durch die Pumpe 440 Lösung aus dem Behälter 70 in den Behälter 400 gepumpt, dort konzentriert und nach Oeffnen des Ventils 435 durch die Pumpe 436 in den Behälter 30 befördert.

Der Wärmeerzeugungsbehälter 46 hat fast den gleichen Aufbau wie die im Behälter 400 befindliche Einrichtung zum Konzentrieren der hygroskopischen Lösung. Letztere kann man auch für die Wärmeerzeugung benutzen und damit Bauteile sparen.

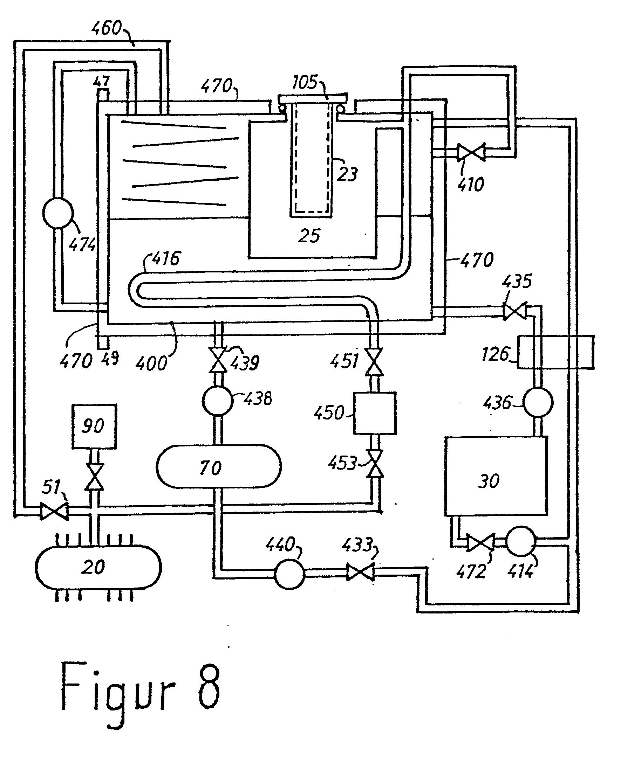

Fig. 8 zeigt eine solche Ausführung. Der Behälter 470 umschliesst weitgehend den Behälter 400 und bildet mit ihm einem Wärmeaustauscher. Er enthält Wasser einer Heizungsanlage, das über die Wände des Behälters 400 Wärme aus der Lösung dieses Behälters aufnehmen kann. Wenn die Sonne scheint und das Ventil 51 geöffnet ist, strömt Wasserdampf vom Behälter 20 in den Behälter 400 und kondensiert dort, wenn der Anlage mehr Wärme für Heizzwecke entnommen wird, als ihr durch Sonnenstrahlung zugeführt wird und damit eine gewisse Temperatur der Lösung im Behälter 400 nicht aufrecht erhalten werden kann. Uebersteigt die von der Sonnenstrahlung erzeugte Wärme den Wärmebedarf, dann steigt die Temperatur in Behälter 400 und der Dampfstrom über das Ventil 51 kehrt seine Richtung um. Im Behälter 400 hört das Kondensieren von Wasserdampf und das Verdünnen der Lösung auf. Diese gibt Wasserdampf ab und konzentriert sich.

In Fig. 7 ist die Verbindung des Behälters 400 über die Rohrleitung 460 mit dem Behälter 20 nicht unbedingt erforderlich. Sie ermöglicht die Ausnutzung der Wärme welche bei der Kondensation des aus dem Calciumhydroxid ausgetriebenen Wasserdampfes frei wird. Dagegen ist sie in der Ausführung der Fig. 8 wesentlich, weil sie hier dazu verwendet wird den im Behälter 20 gebildeten Dampf mit Lösung in Verbindung zu setzen, sodass er kondensiert und Wärme abgibt.

**Ansprüche**

1. Verfahren zur Speicherung von Wärmeenergie, wobei ein Hydroxid, z. B. Calcium-, Magnesium- oder Bariumhydroxid, durch Wärmezufuhr in ein Oxid und Wasserdampf zersetzt, diese Stoffe getrennt und später wieder zusammengebracht werden, dadurch gekennzeichnet, daß mittels des Oxids einem wasserhaltigen hygroskopischen Stoff, z. B. Hydrat oder eine Lösung von Natrium- oder Kaliumhydroxid oder Calciumchlorid, Wasser entzogen und nach Rückumwandlung des dabei gebildeten Hydroxids durch weitere Wärmezufuhr in das Oxid dieser Vorgang so oft wiederholt wird, bis der hygroskopische Stoff als hochkonzentrierte Lösung, festes Hydrat oder im hydratwasserfreien Zustand vorliegt, und daß zur Wärmerückgewinnung der entwässerte hygroskopische Stoff mit Wasser und/oder Wasserdampf zur exothermen Reaktion gebracht wird, wobei der betreffende Stoff so ausgewählt ist, daß bei Bildung einer Lösung durch Zusatz von Wasser mindestens aber von Wasserdampf Wärme frei wird.

2. Verfahren nach Anspruch 1, dadurch gekennzeichnet, daß Teilmengen des festen hygroskopischen Stoffs durch Hindurchleiten einer ungesättigten Lösung durch einen Vorrat entnommen und die dabei gebildete Lösung höherer Konzentration an anderer Stelle mit Wasser oder Wasserdampf zur exothermen Reaktion gebracht wird.

3. Verfahren nach Anspruch 1 oder 2, dadurch gekennzeichnet, daß zwei über die Dampfphase in Verbindung stehende hygroskopische Stoffe mit unterschiedlichem Dampfdruck verwendet werden, wobei während der Wärmerückgewinnung eine im Kreislauf geförderte Lösung des einen hygroskopischen Stoffes abwechselnd mit Wasser und/oder Wasserdampf zur exothermem Reaktion gebracht und durch Entzug von Wasserdampf durch den anderen hygroskopischen Stoff wieder konzentriert wird.

4. Verfahren nach einem der vorhergehenden Ansprüche, dadurch gekennzeichnet, daß das Hydroxid mit einem neutralen, gut wärmeabstrahlenden Stoff gemischt wird.

5. Verfahren zur Speicherung von Wärmeenergie, wobei ein Hydroxid, z. B. Calcium-, Magnesium- oder Bariumhydroxid, durch Wärmezufuhr in ein Oxid und Wasserdampf zersetzt, diese Stoffe getrennt und später wieder zusammengebracht werden, wobei mittels des Oxids einem ersten wasserhaltigen hygroskopischen Stoff, z. B. Hydrat oder eine Lösung von Natrium- oder Kaliumhydroxid oder Calciumchlorid, Wasser entzogen und nach Rückumwandlung des dabei gebildeten Hydroxids durch weitere Wärmezufuhr in das Oxid dieser Vorgang so oft wiederholt wird, bis der hygroskopische Stoff als hochkonzentrierte Lösung, festes Hydrat oder im hydratwasserfreien Zustand vorliegt, dadurch gekennzeichnet, daß mittels dieses entwässerten ersten hygroskopischen Stoffs einer Lösung eines zweiten hygroskopischen Stoffs Wasser entzogen wird, und daß zur Wärmerückgewinnung der entwässerte zweite hygroskopische Stoff mit Wasserdampf zur exothermen Reaktion gebracht wird.

6. Vorrichtung zur Durchführung des Verfahrens nach einem der Ansprüche 1 bis 5, bestehend aus einem ersten Behälter, in welchem das Hydroxid durch Sonnenstrahlenwärme zersetzt werden kann und einem zweiten Behälter, in welchem Wasser verdampfen kann, so daß dabei die Verdampfungswärme der Umgebung entzogen wird, gekennzeichnet durch einen dritten, hygroskopische Lösung oder das Hydrat eines hygroskopischen Stoffs enthaltenden Behälter (30, 300, 46), dessen Hohlraum über der Lösung abwechselnd mit dem ersten und dem zweiten Behälter (10 und 20) zu verbinden ist, sowie einen Wärmeaustauscher (40, 46) zwischen dem dritten Behälter (30, 300, 46) und einer Wärme verbrauchenden Heizeinrichtung (47, 49).

7. Vorrichtung nach Anspruch 6, dadurch gekennzeichnet, daß der dritte Behälter in einen größeren Vorratsbehälter (30, 300), welcher mit dem ersten Behälter (10) zu verbinden ist, und in einen kleineren Wärmeerzeugungsbehälter (46), welcher mit dem zweiten Behälter (20) zu verbinden ist und mit dem Wärmeaustauscher (40, 46) für die Wärmeabgabe zusammenwirkt, aufgeteilt ist, wobei die beiden Teilbehälter (30, 300, 46) durch absperrbare Leitungen (36, 37) in beiden Richtungen miteinander zu verbinden sind.

8. Vorrichtung zur Durchführung des Verfahrens nach Anspruch 5, bestehend aus einem ersten Behälter, in welchem das Hydroxid durch Sonnenstrahlen zersetzt werden kann und einem zweiten Behälter in welchem Wasser verdampfen kann, so daß dabei Verdampfungswärme der Umgebung entzogen wird, gekennzeichnet durch, einen dritten Behälter (300), der hygroskopische Lösung oder das Hydrat eines hygroskopischen Stoffs enthält, und dessen Hohlraum über der Lösung mit dem ersten Behälter zu verbinden ist, einen vierten, hygroskopische Lösung enthaltenden Behälter (46), dessen Hohlraum über der Lösung mit dem zweiten Behälter (20) zu verbinden ist, einen Wärmeaustauscher (40, 46) zwischen dem vierten Behälter (46) und einer Wärme verbrauchenden Heizeinrichtung (47, 49), sowie ein Rohrleitungssystem, das es erlaubt, einen Kreislauf einer hygroskopischen Lösung zwischen dem vierten Behälter (46) und einem fünften Behälter (332) zu erzeugen, wobei der Raum über der im fünften Behälter (332) befindlichen Lösung mit dem Raum über dem im dritten Behälter (300) befindlichen Material in Verbindung steht, wobei Mittel für den Wärmeaustausch zwischen dem dritten und dem fünften Behälter vorgesehen sind.

**Claims**

1. Process for storage of thermal energy, whereby a hydroxide, e. g. calcium, magnesium or barium hydroxide, is decomposed into an oxide and water vapor by supply of heat, the said substances being separated and subsequently brought together again, characterized in that by means of the oxide, water is withdrawn from an aqueous hygroscopic substance, e. g. hydrate or a solution of sodium or potassium hydroxide or calcium chloride, and in that after reconversion of the hydroxide formed thereby into the oxide by further supply of heat, this process is repeated until the hygroscopic substance is present as a highly concentrated solution, solid hydrate, or in the anhydrous hydrate state, and in that for recovery of heat the dehydrated hygroscopic substance is caused to react exothermally with water vapor, whereby the substance in question should be so selected that heat will be released in formation of a solution by addition of water or at least of water vapor.

2. Process as in claim 1, characterized in that batches of solid hygroscopic substance are taken from a reservoir by leading an unsaturated solution through it, and the solution with higher concentration that is formed thereby is brought to exothermal reaction with water or water vapor at another location.

3. Process as in claim 1 or 2, characterized in that two hygroscopic substances of different vapor pressure are used being in connection by the vapor phase, whereby during the recovery of heat a circulating solution of one of the hygroscopic substances alternatingly is brought to exothermal reaction with water and/or water vapor and is concentrated again by withdrawing water vapor by the other hygroscopic substance.

4. Process as in one of the above claims, characterized in that the hydroxide is mixed with a neutral substance that has good heat radiating properties.

5. Process for storage of thermal energy, whereby a hydroxide, e. g. calcium, magnesium or barium hydroxide, is decomposed into an oxide and water vapor by supply of heat, the said substances are separated and subsequently brought together again, whereby by means of the oxide, water is withdrawn from a first aqueous hygroscopic substance, e. g. hydrate or a solution of sodium or potassium hydroxide or calcium chloride, and after reconversion of the hydroxide formed thereby into the oxide by further supply of heat, the said process is repeated until the hygroscopic substance is presented as a highly concentrated solution, solid hydrate or in an anhydrous hydrate state, characterized in that by means of the said dehydrated first hygroscopic substance, water is withdrawn from a solution of a second hygroscopic substance, and that for recovery of heat the said second dehydrated hygroscopic substance is brought to exothermal reaction with water vapor.

6. Apparatus for execution of the process as in one of claims 1 to 5 comprising a first receptacle in which the hydroxide can be decomposed by the heat of solar radiation, a second receptacle in which water can vaporize so that thereby the heat of evaporation can be drawn from the environment, characterized by a third receptacle (30, 300, 46) containing hygroscopic solution or the hydrate of a hygroscopic substance, whereof the volume above the solution is alternatingly to be connected to the first and the second receptacle (10 and 20), as well as a heat exchanger (40, 46) between the third receptacle (30, 300, 46) and a heating device (47, 49) that consumes heat.

7. Device as in claim 6, characterized in that the third receptacle is divided into a larger reservoir (30, 300) that is to be connected with the first receptacle (10) and smaller heat generating receptacle (46) that is to be connected with the second receptacle (20) and cooperates with the heat exchanger (40, 46) for the delivery of heat, whereby the two part receptacles (30, 300, 46) are to be connected with each other in both directions by lines (36, 37) that can be closed off.

8. Apparatus for execution of the process according to claim 5, comprising a first receptacle in which the hydroxide can be decomposed by solar radiation, and a second receptacle in which water can vaporize so that thereby the heat of evaporation is withdrawn from the environment, characterized by a third receptacle (300) that contains hygroscopic solution or the hydrate of a hygroscopic substance and whose space above the solution is to be connected with the first said receptable, a fourth receptacle (46) containing hygroscopic solution whose space above the solution ist to be connected with the second receptacle (20), a heat exchanger (40, 46) between the fourth receptacle (46) and a heating device (47, 49) that consumes heat, as well as a piping system that allows circulation of a hygroscopic solution between the fourth receptacle (46) and a fifth receptacle (332), whereby the space above the solution in the fifth receptacle (332) is in connection with the space above the material in the third receptacle (300), whereby means are provided for heat exchange between the third and fifth receptacles.

**Revendications**

1. Procédé de stockage d'énergie de chaleur suivant lequel un hydroxyde, par exemple de l'hydroxyde de calcium, de magnésium ou de barium est décomposé en oxyde et en vapeur d'eau par apport de chaleur, ces corps étant séparés et remis en contact plus tard, caractérisé en ce que de l'eau est soustraite à un corps hygroscopique contenant de l'eau, par exemple à un hydrate ou une solution d'hydroxyde de sodium ou de potassium ou de chlorure de calcium à l'aide de l'oxyde, qu'après reconversion de l'hydroxyde formé en oxyde par apport supplémentaire de chaleur, ce processus est répété jusqu'à ce que le corps hygroscopique se présente comme solution de haute concentration ou comme hydrate solide ou à l'état anhydre, et que pour la récupération de la chaleur, le corps hygroscopique, déshydraté est mis en réaction exothermique avec de la vapeur d'eau, le corps en question étant choisi en sorte qu'il y ait dégagement de chaleur lors de la formation d'une solution soit par addition d'eau ou au moins par addition de vapeur d'eau.

2. Procédé selon la revendication 1, caractérisé en ce que des quantités partielles du corps solide hygroscopique sont soutirées en faisant passer une solution non saturée à travers une quantité de réserve et que la solution de concentration plus élevée ainsi formée soit mise en réaction exothermique avec de l'eau ou de la vapeur d'eau ailleurs.

3. Procédé selon les revendications 1 ou 2, caractérisé en ce qu'on utilise deux corps hygroscopiques de pressions de vapeur différentes qui sont en communication moyennant leurs phases de vapeur et que lors de la récupération de la chaleur, la solution de l'un des deux corps hygroscopiques circulant dans un circuit est soumise alternativement à une réaction exothermique avec de l'eau et/ou de la vapeur d'eau et est reconcentrée par extraction de vapeur d'eau moyennant l'autre corps hygroscopique.

4. Procédé selon l'une des revendications précédentes, caractérisé en ce que l'hydroxyde est mélangé à un corps neutre ayant un haut pouvoir d'émission de chaleur.

5. Procédé de stockage d'énergie de chaleur suivant lequel un hydroxyde, par exemple de l'hydroxyde de calcium, de magnésium ou de barium est décomposé en oxyde et en vapeur d'eau par apport de chaleur, ces corps étant séparés et remis en contact plus tard, suivant lequel de l'eau est soustraite à un premier corps hygroscopique contenant de l'eau, par exemple à un hydrate ou une solution d'hydroxyde de sodium ou de potassium ou de chlorure de calcium à l'aide de l'oxyde, qu'après reconversion de l'hydroxyde formé en oxyde par apport supplémentaire de chaleur, ce processus est répété jusqu'à ce que le corps hygroscopique se présente comme solution de haute concentration ou comme hydrate solide ou à l'état anhydre, caractérisé en ce qu'à l'aide de ce premier corps hygroscopique, déshydraté on retire de l'eau à une solution d'un deuxième corps hygroscopique, et que le deuxième corps hygroscopique déshydraté est mis en réaction exothermique avec de la vapeur d'eau pour la récupération de la chaleur.

6. Dispositif pour l'exécution du procédé selon l'une des revendications 1 à 5, comportant un premier récipient, dans lequel de l'hydroxyde peut être décomposé par de la chaleur de rayons solaires et un deuxième récipient dans lequel de l'eau peut s'évaporer, la chaleur d'évaporation étant soustraite à l'environnement, caractérisé par un troisième récipient (30, 300, 46) contenant une solution hygroscopique ou l'hydrate d'un corps hygroscopique et dont l'espace libre au-dessus de la solution peut être mis en communication alternativement avec le premier et le deuxième récipient (10 et 20), ainsi que par un échangeur de chaleur (40, 46) entre le troisième récipient (30, 300, 46) et une installation de chauffage consommant de la chaleur (47, 49).

7. Dispositif selon la revendication 6, caractérisé en ce que le troisième récipient est subdivisé en un récipient de réserve plus grand (30, 300) lequel peut être mis en communication avec le premier récipient (10) et un récipient de production de chaleur plus petit (46) lequel peut être mis en communication avec le deuxième récipient (20) et coopère avec l'échangeur de chaleur (40, 46) pour le débit de la chaleur, les deux récipients partiels (30, 300, 46) pouvant être mis en communication dans les deux sens à l'aide de conduites qui peuvent être fermées.

8. Dispositif pour exécuter le procédé selon la revendication 5, comportant un premier récipient dans lequel l'hydroxyde peut être décomposé par les rayons du soleil et un deuxième récipient dans lequel de l'eau peut s'évaporer, de la chaleur d'évaporation étant soustraite à l'environnement, caractérisé par un troisième récipient (300) contenant de la solution hygroscopique ou de l'hydrate d'un corps hygroscopique et dont l'espace libre au-dessus de la solution peut être mis en communication avec le premier récipient, un quatrième récipient contenant de la solution hygroscopique (46) dont l'espace libre au-dessus de la solution peut être mis en communication avec le deuxième récipient (20), un échangeur de chaleur (40, 46) entre le quatrième récipient (46) et une installation de chauffage (47, 49) qui consomme de la chaleur, ainsi qu'un système de tuyaux permettant de faire circuler une solution hygroscopique entre le quatrième récipient (46) et un cinquième récipient (332), l'espace libre au-dessus de la solution qui se trouve dans le cinquième récipient (332) étant en communication avec l'espace libre au-dessus de la matière qui se trouve dans le troisième récipient (300), des moyens étant prévus pour le transfert de la chaleur entre le troisième et le cinquième récipient.

Fig. 1

0 029 799

Fig. 2

0 029 799

Fig. 3a

Fig. 3b

3

Fig. 3c

Fig. 4

Fig. 5

0 029 799

Fig. 6

0 029 799

Figur 7

Figur 8